# EUROPEAN PATENT SPECIFICATION

(11) **EP 4 138 718 B1**
(45) Date of publication and mention of the grant of the patent: **05.08.2026**
(21) Application number: 21720291.0
(22) Date of filing: 23.04.2021
(51) Int. Cl.: A61C 3/025, F16K 7/07

(54) **TUBE FOR A PINCH VALVE, PINCH VALVE AND POWDER GAS JET DEVICE HAVING SUCH A TUBE AND METHOD FOR PRODUCING SUCH A TUBE FOR A PINCH VALVE**
ROHR FÜR EIN QUETSCHVENTIL, QUETSCHVENTIL UND PULVERGASSTRAHLVORRICHTUNG MIT EINEM SOLCHEN ROHR SOWIE VERFAHREN ZUR HERSTELLUNG EINES SOLCHEN ROHRS FÜR EIN QUETSCHVENTIL
TUBE POUR VANNE À MANCHON, VANNE À MANCHON ET DISPOSITIF À JET DE GAZ EN POUDRE COMPORTANT UN TEL TUBE ET PROCÉDÉ DE PRODUCTION D'UN TEL TUBE POUR UNE VANNE À MANCHON

(30) Priority: 24.04.2020 EP 20171349
(43) Date of publication of application: 01.03.2023
(73) Proprietor: Ferton Holding S.A., 2800 Delémont (CH)
(72) Inventor: BEANI, Florent, 01170 Gex (FR); DONNET, Marcel, 01630 Saint Jean de Gonville (CH); FOURNIER, Maxime, 1010 Lausanne (CH)
(74) Representative: Müller Schupfner & Partner Patent- und Rechtsanwaltspartnerschaft mbB (Muc)
(86) International application number: PCT/EP2021/060662
(87) International publication number: WO 2021/214291

(56) References cited:
- EP-A1- 1 402 845
- EP-A1- 3 265 015
- EP-A1- 3 265 015
- EP-A2- 1 046 843
- EP-A2- 1 046 843
- DE-B- 1 097 778
- DE-B- 1 097 778
- GB-A- 2 494 464
- GB-A- 2 494 464
- JP-A- H04 101 087
- US-A- 5 813 842
- US-A- 5 813 842
- US-A1- 2014 308 625
- US-A1- 2018 340 635
- US-A1- 2018 340 635

## Description

The present invention concerns a tube for a pinch valve, a pinch valve and a powder gas jet device having such a pinch valve and a method for producing such a tube for a pinch valve
Professional dental prophylaxis is a maintenance treatment to remove dental plaque and calculus, which a patient is not able to remove during daily home care. This procedure is important, since the accumulation of dental plaque would lead to dental diseases such as tooth decay, gingivitis and periodontitis.

Air polishing is a dental prophylaxis procedure that sprays a powder on the teeth with the assistance of an air stream and a liquid stream, usually a water stream. Its advantages include the possibility to reach difficult areas such as interspaces between teeth, pockets between teeth and gingiva as well as around brackets, implants and appliances. Air polishing is an effective method, since it does neither need to perform repetitive movements nor different stages. It is faster than other methods and needs relatively little training.

For air polishing in general a powder gas jet device is used, as for example disclosed in EP 3 265 015 A1. Such a powder gas jet device typically comprises a handpiece, a powder chamber and often a stationary unit. The powder gas jet device mixes the powder with a gas for forming a powder gas mixture, which, in turn, is ejected by the handpiece in operation, usually surrounded by a water stream or jet. For actuating the powder gas jet device a food pedal can be used.

In order to gain all the benefit of air polishing, it is needed to manage the powder flow without wear. As the powder is an abrasive material, it is difficult to find a system allowing to block the powder flow without any wear of a valve system. When the valve system is worn-off, powder is sprayed everywhere until the system is stopped. The challenge for such a valve system is the powder being an abrasive material, which is able to penetrate inside any moving part to either block it or to wear it off. Furthermore, any connection part with powders is a part, in which the powder can accumulate and finally clog the system.

Currently, there are two alternatives available to solve said problem. According to a first alternative, a gas flow is blocked upstream to a powder chamber such that the valve does block the gas, such as air, but does not enter into contact with the powder. This resolves the problem of valve wear but makes the overall prophylaxis procedure more difficult: at every food pedal press for actuating the powder gas jet device, the powder chamber needs first to be filled with gas and at the end to be emptied from the gas. As a consequence, the system works with a delay of few seconds between the pedal press action and the treatment. This procedure can only be established for a comparably small powder chamber. If the powder chamber volume increases, the delay becomes longer (> 5 sec) so that it is not applicable any longer for a prophylaxis procedure.

Consequently, the concept of blocking air upstream to the powder chamber leads to a long delay between pedal press and activation of the device. This is detrimental for the application, for treatment precision and safety purposes. For example, if the user removes a handpiece before the powder chamber is empty, powder will be sprayed everywhere and could even be sprayed inside the eyes.

According to a second alternative, the powder flow can be blocked downstream to the powder chamber, in order to overcome the issue of delay between food pedal press and ejecting the powder gas mixture as explained above. Using standard valves leads to an unreliable powder gas jet device. Powder will enter inside the moving part of the valve and wear it off. Also, geometry changes in the valve are potentially clogging areas which tend to block the valve.

It turned out that using a pinch valve is a reliable means to control the gas/powder mixture because when the valve is open, no perturbation occurs on the powder flow. Using a pinch valve is an optimum process for powder because no geometrical change disturbs the powder flow during operation.

In particular, it turned out that particles of the gas/powder mixture generate small cuts into the inner side of the tubes of the pinch valves, when the tube is squeezed. As a consequence, in an operation mode, the internal pressure inside the channel creates forces that tend to elongate the entire inner side of the tube and especially to extend the cuts being generated by the particles of the transported gas/powder mixture.

For sake of completeness, reference is made to EP 1 046 843 A2, DE 10 97 778, GB 2 494 464 A, US 5,813,842 and US 2018 340 635, which address tubes for pinch valves. The tube of DE 10 97 778 forms a channel having a non-circular cross section. According to the teaching of EP 1 046 843 there is an insert provided, the insert pressing against the tube for forming a protruding section, which faces the centre of the tube. JP H04 101087 A discloses a flexible tube for use in a peristaltic pump. The inner curvature of the tube includes protrusions facing towards the centre of the tube.

Considering the above, it is an object of the present invention to provide a tube which does not support extending or continuation of cuts at the inner side of the tube, in particular when the cuts or cracks are generated by powder or particles, when the tube is squeezed.

The problem is solved by the tube according to claim 1, a pinch valve according to claim 6, a method according to claim 7 a pump device according to claim 8 and a powder gas jet device according to claim 9. Preferred embodiments are incorporated in the dependent claims, the description and the figures.

According to a first aspect of the present invention a tube for a pinch valve, in particular incorporated into a powder gas jet device, is provided, the tube having an inner channel for transporting a medium under pressure in an operation mode along a transport direction, the tube having an inner curvature delineating the circumference of the inner channel in a cross section of the tube along a plane perpendicular to the inner channel, a shape of the tube being configured such that the inner curvature presents at least a contraction section, which, in the operation mode, undergoes deformation forces that tend to contact the contraction section of the inner curvature.

Contrary to the state of the art, the tube according to the present invention includes a contraction section, in which a contraction along an inner curvature of the inner side of the tube is established. It turned out that it is possible that the shape of the tube can establish the contraction section which counteracts tensile stresses along the inner curvature, which should be avoided as they would enhance crack growth propagation after the medium, in particular particles of the powder/gas mixture, has generated small cracks or cuts in the material of the tube, which is, for example, made of rubber. As a result, the tube according to the invention can reduce a risk for continuation of a crack or cut being, for example, caused by the medium being transported. Consequently, a life time of the tube, being used in a pinch valve, increases. In particular, it is avoided that cuts being caused by a powder/gas mixture or more precisely being created by particles of the powder/gas mixture, when the tube is squeezed, are elongated during operation, i. e. during passing the inner channel of tube, since the contraction section, being located preferably in regions being prone for cuts caused by the powder/gas mixture, counteracts the forces, which otherwise elongates the inner side of the inner channel. The inner side forms an area of the inner channel, whereas the inner curvature defines a line.

In particular, the shape of the tube exist also in a non-squeezed state, in which for example a medium is transported through the inner channel and, for example, an actuation mechanism acting on the tube for closing the inner channel, does not act on the tube such that the tube is not squeezed. In other words: the shape of the tube causing the contraction section is not a result of a current deformation of the tube, being applied.

Preferably, the "contraction" establishes a force, being directed along the circumferential direction and along the inner curvature, in particular such that at least two sections of the contraction section have a tendency to move towards to each other, when a rip or cut is formed between these two sections. Thus, a continuation and an enlargement of the rip or crack can be avoided in an advantageous manner. In particular, the contraction sections are established in two parts of the inner curvature of the tube being opposite to each other.

Furthermore, it is provided according to the invention that the inner curvature comprises two contraction sections, such as a first contraction section and a second contraction section, diametrally opposed to each other. In particular the two contraction sections are located at the inner curvature of the inner channel at opposite sides. In particular, the tube has an elasticity for supporting the formation of the contraction section.

According to the invention, it is provided that for forming the contraction section the tube varies its thickness and/or a radius of curvature, being assigned to the inner curvature along the circumferential direction. It turned out that these modifications of the shape of the tube, in particular concerning the cross section of the tube and/or the inner channel in a plane perpendicular to the transport direction, can establish a contraction section, giving the tube the tendency to contract the inner curvature of the tube along the circumferential direction.

According to a preferred embodiment of the present invention, the cross section of the inner channel has a first axis and a second axis, which is not parallel to the first axis, preferably perpendicular to the first axis, wherein a ratio of the first axis to the second axis has a value between 0.1 and 0.95, preferably between 0.2 and 0.8 and more preferably between 0.4 and 0.8, even more preferably between 0.55 and 0.8, in a non-squeezed state. It turned out that establishing such a geometry in particular, for such ratios between 0.55 and 0.8, the lifetime of the tube can increase dramatically, in particular, compared to those tubes having a cross section being circular.

According to the invention, the cross section of the inner channel in a plane perpendicular to the transport direction corresponds to a Cassini oval. Such a shape turned out being suitable for establishing the advantageous for forming the contraction sections.

The tube is preferably pre-shaped for providing the contraction section. Such a tube might be obtained from a tube having a pure circular cross section of the inner channel in an original state. By a specific treatment, such as a heat treatment, during a deformation of the tube, the tube stays in the pre-shaped state, even in a non-squeezed state, which acts on the tube.

In particular, a test has been performed, wherein tubes were inserted into a standard air polishing device such as an AIRFLOW^{®} device of the applicant in order to let powder under pressure pass through the tube. A PERIO^{®} powder has been used in this device, such PERIO^{®} powder including glycine in the form of a small sized powder, which means a powder with grains or granules having a mean size of about 10 - 100 µm. A cycle includes three seconds in the closed state and three seconds in the opened state of the pinch valve and has been used for stressing the tube of the pinch valve. It turned out that the lifetime of a tube having no contract section is about 38.000 pinching cycles, whereas the lifetime of a pinch valve having a contract section is about 135.000 pinching cycles.

In particular, it is provided that a radius of curvature of the inner curvature changes along the circumferential direction, wherein a curvature of the inner curvature, being defined as reciprocal value of the radius of curvature, is smaller than 1 1/mm, more preferably smaller than 0.5 1/mm or most preferably smaller than 0.1 1/mm or even has a negative value. Preferably, the radius of curvature has its maximum in the regions of the tubes being located next or adjacent to the parts of an actuation mechanism that acts on the tube during operation in an actuated or squeezing state. For example, the curvature has a value of 0 to 1/mm, i. e. the inner curvature is at least partially flat. It is even considerable that the curvature has a negative value, being assigned to protrusions at the inner sider of the inner channel.

According to the invention it is provided that the curvature of the inside includes a protrusion facing towards the centre of the tube channel. In such a case, the inside forms a "boss" or dent that supports the formation of the contraction section. Furthermore, according to another aspect of the invention, the material in the relevant regions, namely in the regions close to the parts of the actuation mechanism interacting with the tubes, is increased such that the thickness of the tube increases, i. e. the wall of the tube, which increases the lifetime of the tube and consequently the durability of the pinch valve.

Preferably, a property of the material of the tube changes along the inner curvature. For example, an E-module of the material of the tube changes along a direction perpendicular to the transport direction and/or along the inner curvature for establishing the contraction section. Preferably, the tube is made from polyurethane (PUR). Many tube materials have been tested, and it turned out that mainly PUR is the most resistant material. Thus, the lifetime of the pinch valve, in particular of the tube, can be further increased.

Furthermore, it is conceivable that the inner side is coated, at least partially, in particular in the region of the tube, being located inside the actuation mechanism of the pinch valve. Preferably, the first contraction section and/or the second contraction section are coated. For, example, coating makes the inner side of the tube more resistant against the powder. Thus, the lifetime of the pinch valve can further increased.

According to another aspect of the present invention a pinch valve is provided, the pinch valve including the tube according to the present invention. Preferably, the pinch valve includes an actuation mechanism to establish a non-squeezed state and a squeezed state, wherein in the actuated or squeezed state the inner channel has a reduced cross section or is closed. In particular, during the actuated state the tube is squeezed by the actuation mechanism.

According to further embodiment, it is provided that the actuation mechanism includes a first part and a second part being arranged opposite to each other, wherein the actuation mechanism is configured to change the distance between the first part and the second part, in particular, for opening and closing the inner channel, the tube being located between the first part and the second part, wherein the first contraction section of the tube is located adjacent to the first part and the second contraction section of the tube is located adjacent to the second part, wherein essentially the first contraction section and/or the second contraction section includes the contraction section. Preferably, the first axis of the cross section extends parallel to a direction of moving the first part and the second part of the actuation mechanism, while the second axis of the cross section extend perpendicular to the first axis.

It is also conceivable that the pinch valve is used to control an amount of ejected powder gas mixture, i.e. the pinch valve is used as a proportional valve. Preferably, the contraction is only realized in a defined section of the inner curvature or the inner side of the inner channel of the tube, in particular, in a region being located next to the parts of the actuation mechanism that deforms the tube during operation. Since the actuation mechanism of a pinch valve would in general cause a tensile stress in specific regions of the tube, it is of advantage that the pinch valve according to the present invention establishes a contraction that counteracts said tensile stress, which would otherwise lead to a continuation or increase of a crack or cut at the inner side of the tube. As a result, the lifetime of the tube of the pinch valve can be increased by a factor being bigger than two or even three.

Preferably, the contraction section is established near or adjacent to the components of the actuation mechanism that interacts with the tube. Preferably, the tube passes or extends through the actuation mechanism. It is also possible, that the pinch valve is incorporated inside a joining unit that is intended to connect a handpiece to ta stationary unit.

For example, the pinch valve is incorporated inside a stationary unit of a powder-gas jet device and/or inside of a joining unit that connects a handpiece of the powder gas jet device with the stationary unit. Preferably, the stationary unit also includes a powder chamber being removably connected to the outside of a housing of the stationary unit. In particular, it is provided that the tube and/or the pinch valve is configured such that the tube itself establishes at least partially a contraction in the contraction section, which would otherwise experience a tension or tensile stress in the operating state.

Another aspect of the present invention is a method for producing a tube according to the present invention, comprising a heat treatment for establishing the compression stress acting on the inner side of the tube. All features and benefits being discussed in the context of the pinch valve and the tube analogously apply for the method and vice versa.

According to the present invention the heating treatment includes:
- heating the tube to a temperature between 40 °C and 500 °C, preferably between 60 °C and 200 °C and most preferably 80 °C and 100°C, the heating in particular taking 0 to 30 minutes, preferably 1 to 20 minutes and most preferably 1 to 10 minutes
- cooling the tube to a temperature between 1 °C and 50°C, preferably between 5°C and 50°C and most preferably between 15 °C and 25 °C. Immediately after heating, the pre-deformed tube is placed in a cold water bath having a temperature between 10 °C and 25 °C to fix the shape. In particular, a deformation tool is used to introduce the deformation with respect to the original circular shape of the cross section of the tube. The deformation of the tube is established before or during heating and maintains during cooling at least temporary. In particular, after cooling deformation tool is removed and the tube keeps the desired shape, i. e. the pre-shaped form. It turned out that by a heat treatment, the internal stress inside the tube can be reduced, such that the effect of the compression stress established by the shape of the tube becomes more intense.

Preferably, the tube is placed in a mould or jig for changing its cross section and/or for modifying its inner stress. In particular, the tube is effected by a temperature treatment including a first period and a second period, the temperature during the first period being higher than the temperature during the second period, while the tube is arranged inside the mould or jig. For modifying the shape of the tube for example a hot liquid, such as hot water, is used during the first period, while a cold liquid, such as cold water, is used in the second period. Preferably, the inner side of the mould/jig at least partially corresponds to the general course of the tube inside the pump device, the tube being intended for.

Another aspect of the present invention is a pump device, in particular a peristaltic pump, comprising a squeezing mechanism and a tube according to the present invention, wherein the pump device is preferably integrated in a powder gas jet device. In particular, all benefits and specifications discussed in the context of the tube and method for realizing the tube applies analogously to pump device and vice versa. Preferably the tube has an oval cross section.

Another aspect of the present invention is the powder gas jet device comprising a pinch valve according to the present invention, preferably having a tube according to the present invention. All the benefits and features discussed in the context of the pinch valve, the tube and the method for realizing the tube applies analogously to the powder gas jet device and vice versa. Preferably, it is provided that the powder gas jet device comprises a stationary unit, a handpiece and a joining unit for connecting the handpiece to the stationary unit, wherein the pinch valve is located inside the joining unit.

Wherever not already described explicitly, individual embodiments or their individual aspects and features can be combined or exchanged with one another without limiting or widening the scope of the described invention, whenever such a combination or exchange is meaningful within the scope of the appended claims which define the present invention. Advantages which are described with respect to one embodiment of the present invention are, wherever applicable, also advantageous of other embodiments of the present invention.

In the drawings:
- **Fig. 1**: shows schematically a powder gas jet device according to a first exemplary embodiment of the present invention,
- **Fig. 2**: shows schematically a part of the powder gas jet device including a pinch valve according to a first exemplary embodiment of the present invention,
- **Fig. 3**: shows schematically a pinch valve (top) and a tube (bottom) according to a first exemplary embodiment that does not comprise all features of the claimed invention,
- **Fig. 4**: shows schematically a tube according to a second exemplary embodiment that shows some features of the claimed invention,
- **Fig. 5**: shows schematically a pump device including a squeezing mechanism and
- **Fig. 6**: shows a mould for forming a tube for the pump device of figure 5.

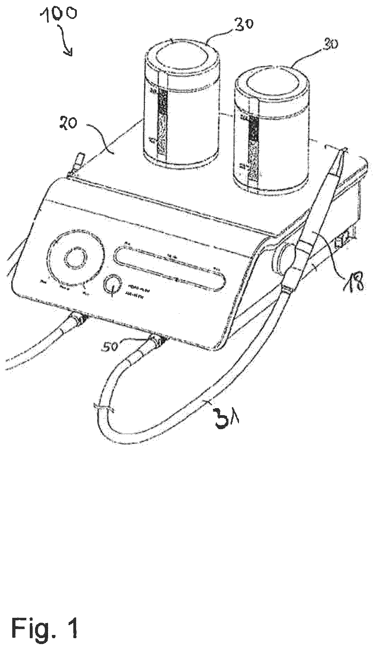

**Figure 1** schematically shows a powder gas jet device 100 according to a first exemplary embodiment of the present invention. Such a powder-gas-jet-device 100 is used for dental prophylaxis by air polishing. Thereby, the powder-gas-jet-device 100 provides a powder gas mixture and ejects the powder gas mixture via a handpiece 18 to a surface of the tooth for removing a biofilm and/or calculus. Besides a handpiece 18 including a nozzle, the powder gas jet device 100 preferably has a stationary unit 20, which can, for example, be placed on a table and is intended for producing and providing the powder gas mixture being used for air polishing. Furthermore, the powder-gas-jet-device 100 comprises at least one removable and, in particular exchangeable, powder-gas-chamber 30, which can be connected to the stationary unit 20 for providing a specific powder being used during the dental treatment.

In particular, it is provided that the powder gas mixture being used during air polishing is formed inside the powder chamber 30 by introducing gas, in particular air, into the powder chamber 30, by mixing the gas and the powder inside the powder chamber 30, for example by using a venturi effect, and by finally exiting the powder chamber 30 as powder gas mixture. For transporting the powder gas mixture to the handpiece 18 a tube system is particularly used. For example, the tube system includes a tube 10 for transporting the medium, i. e. the powder-gas-mixture, and a sleeve tube 31 surrounding the tube 10 for transporting the powder-gas-mixture. Preferably, the tube system, including the sleeve tube 31 and the tube 10 is flexible such that an operator can easily orientate the handpiece 18 in a desired position or orientation. Preferably, the tube system is connected to the stationary unit 20 via an interface 50. For example, such an interface 50 is located at a front panel of the stationary unit 20. For controlling an application of a powder gas mixture by the handpiece 18, a valve system is needed, which controls, whether the powder gas mixture is emitted by the handpiece 18 or not. Such a valve system might be controlled by a foot pedal (not shown), which can be actuated by an operator.

Such a valve is preferably located downstream to the powder chamber 30, since otherwise a delay between acting on the foot pedal and ejecting the powder gas mixture from the handpiece 18 occurs, since the powder chamber 30 needs to be filled with gas in the beginning. However, locating the valve system downstream to the powder chamber 30 results in specific challenges regarding the choice of the proper valve system. Valve systems having a specific mechanism and including several mechanical components can interact with powder of the powder gas mixture such that those valve systems are typically damaged by the powder being accumulated in the valve system. Therefore, it turned out that placing a pinch valve 1 downstream to the powder chamber 30 is a good choice for a proper valve system in a powder gas jet device 100. As a consequence, the powder gas mixture only interacts with an inner side 12 of the tube 10, being part of the pinch valve 1.

In the embodiment illustrated in figure 1, the pinch valve 1 is located in a joining unit 32, plugged to the stationary unit 20 at the interface 50 for connecting the tube system to the stationary unit 20.

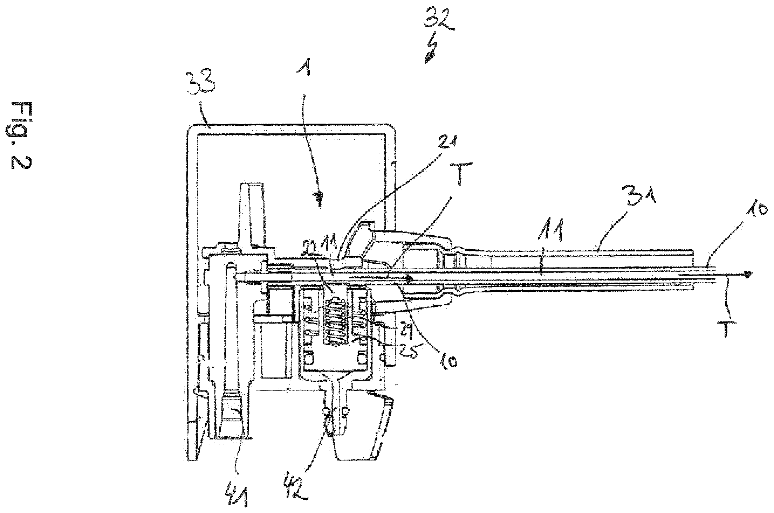

**In** **figure 2****,** the pinch valve 1, being incorporated inside the joining unit 32 is illustrated in detail. Preferably, the joining unit 32 includes a housing 33, which covers the pinch valve 1 and that is configured to be plugged into a corresponding interface 50 of the stationary unit 20. In particular, the joining unit 32 includes at least a first input channel 41, which allows the powder gas mixture to enter the joining unit 32 as well as a second input channel 42, which allows air or another gas to be provided for actuating the pinch valve 1. In the illustrated embodiment of figure 2, the pinch valve 1 includes a first part 21 and a second part 22, being configured such that they can change a distance between the first part 21 and the second part 22, the tube 10 being located between the first part 21 and the second part 22. As a consequence, it is possible to open and close an inner channel 11 of the tube 10 or to change a cross section size of the inner channel 11, being formed by an inner side 12 of the tube 10. In an open state, the powder gas mixture passes the pinch valve 1 and is transported via a transporting direction T to the handpiece 18. In a closed state the path for the powder gas mixture inside of the joining unit 32 is blocked such that no medium, i. e. no powder gas mixture, can be transported to the handpiece 18.

In the illustrated embodiment of figure 2 the actuation mechanism of the pinch valve 1 includes a moving part 25 as well as a spring element 2, which is, in turn, incorporated inside of the moving part 25. Whereas the first part 21 is fixed during the open state and the closed state to the same position, the second part 22 of the actuation mechanism is transferred or translated between two different positions respectively for transferring the pinch valve 1 between the opened state and the closed state. Thus, it is possible to change a size of the cross section of the inner channel 11 of the tube 10, by using the actuation mechanism.

The lifetime of such a pinch valve 1 is mainly determined by the interaction of the tube 10 and the powder of the powder gas mixture on the one hand and the actuation cycles of the pinch valve 1, i. e. the number of transformations from the open state to the closed state. In particular, it turned out that closing and/or opening, i. e. interacting or acting on the tube 10, supports the formation of ruptures in the inner side 12 of the tube 10, which are created by particles of the powder/gas-mixture by cutting into the inner side 12 of the tube 10. In particular, acting on the tube 10 during operation in general supports a tendency to increase or enlarge a rupture and/or a crack being initiated by the interaction of the powder and the inner side 12 of the tube 10.

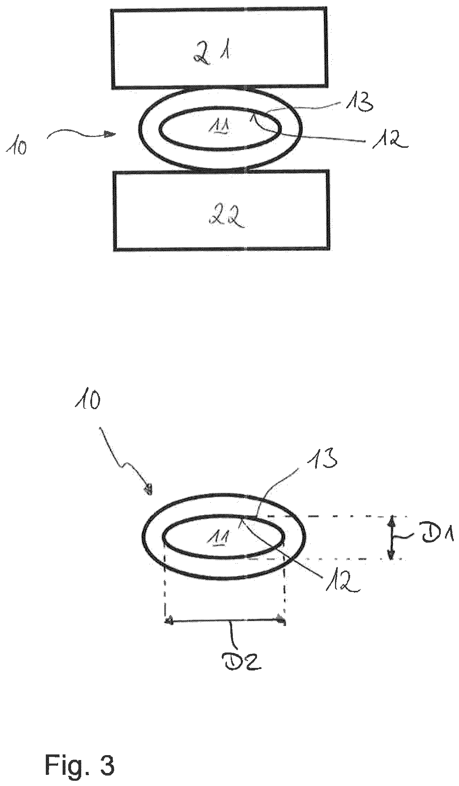

In **figure 3****,** schematically a pinch valve 1 (top) and tube 10 (bottom) for a pinch valve 1 is illustrated. The tube 10 is configured such that the tube 10 has a contraction section, acting on an inner side 12 of the tube 10 such that a contraction along at least a part of an inner curvature 13 of the tube 10 is established, the inner curvature 13 bordering a cross section of the inner channel 11 in a plane perpendicular to the transport direction T. The compression stress defines a contraction section giving the tube the tendency to contract along the inner curvature 13. As a consequence, the tube 10 itself counteracts a crack or a cut formation, in particular counteracts against a continuation of a realized or established crack or cut in the inner side 12 of the tube 10. In particular, it is provided that the compression stress, establishing the desired compression stress, is located in regions of the tubes 10, being located next or adjacent to the first part 21 and the second part 22 of the actuation mechanism, respectively. In other words a first contraction section faces a first part 21 and a second contraction section faces a second part 22 in an assembled state of the pinch valve 1. In particular, the contract sections are established in such sections of the tube 10 contacting the first part 21 and/or second part 22 of the actuation mechanism of the pinch valve 1.

In particular, the shape of the tube 10 is at least established in a non-squeezed state of the pinch valve 1. Such a contraction is, for example, realized by a preshaping of the tube 10. As a consequence, a cross section of the inner channel 11 measured in a plane perpendicular to the transport direction T, differs from a circular or pure circular cross section, in particular in a non-squeezed state. In the embodiment of figure 3, the cross section of the inner channel 11 is elliptical. Preferably, the tube 10 is at least partially pre-shaped, namely in the part being connected or being located inside the actuation mechanism. The tube 10 outside the actuation mechanism or the joining unit 32 might be not pre-shaped. Furthermore, it is provided that a radius of curvature changes along the inner side 12 of the tube 10 in a non-squeezed state. In particular, the radius of an inner curvature 13 has, for example, its maximum in a tube section or region of the tube 10 being located in the non-squeezed state directly next to the first part 21 or the second part 22 respectively of the pinch valve 1. Preferably, the inner curvature 13 has a curvature being defined as reciprocal value (1/r) of the radius of curvature (r). The curvature might smaller than 1 1/mm, more preferably smaller than 0.5 1/mm or most preferably smaller than 0.1 1/mm or even negative. Especially, the curvature is 0 to 1/mm. The inner curvature 13 is assigned to the inner side 12 of the tube 10 in a cross section perpendicular to the transport direction T. Since these regions are the most stressed ones during the operation, in particular regarding a tensile stress 10, the contraction avoids the tensile stress that would otherwise support an increase or a continuation of a rupture or crack being formed at the inner side 12 of the tube 10.

Preferably, the cross section of the inner channel 11 has a geometry in a non-actuated state, having a first axisD1 and a second axis D2. Thereby, the first axis D1 extends into a direction, along which the distance between the first part 21 and the second part 22 of the actuation mechanism is changed for transforming the pinch valve 1 between the closed state and the opened state. The second axis D2 is measured in a direction being perpendicular to the first axis D1 as well as being perpendicular to the transport direction T. Furthermore, it is preferably provided that the cross section of the inner channel 11 has a geometry, the ratio of the first axis D1 to the second axis D2 having a value between 0.4 and 0.95, preferably between 0.5 and 0.8 and most preferably between 0.5 and 0.8, in a non-squeezed state.

For example, such a pre-shaped form having a contraction section is realized by performing a heat treatment during a deformation of a tube 10 having a circular cross section in an original state, i. e. before the heat treatment.

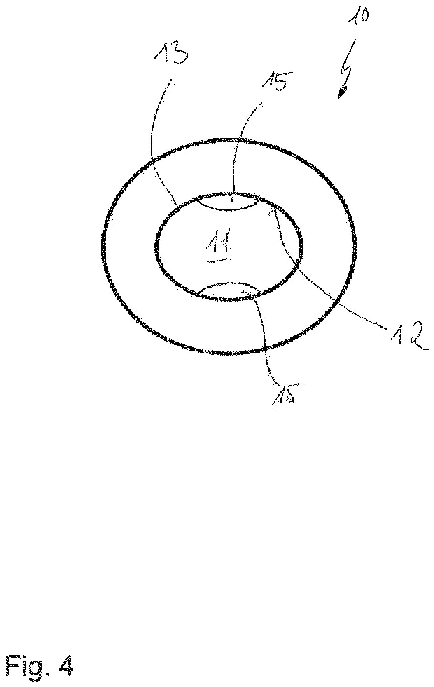

In **figure 4****,** the tube 10 according to a second exemplary embodiment is schematically shown. In particular, it is provided that the inner side 12 of the tube 10 has at least one protrusion 15 that protrudes from the tube 10 inside the inner channel 11 in a direction towards the centre of the inner channel 11. Preferably, the tube 10 includes two protrusions 15 being arranged opposite to each other in a direction perpendicular to the transport direction T. In particular, the at least one protrusion 15 is located in a tube section being adjacent to the first part 21 and second part 22 of the actuation mechanism.

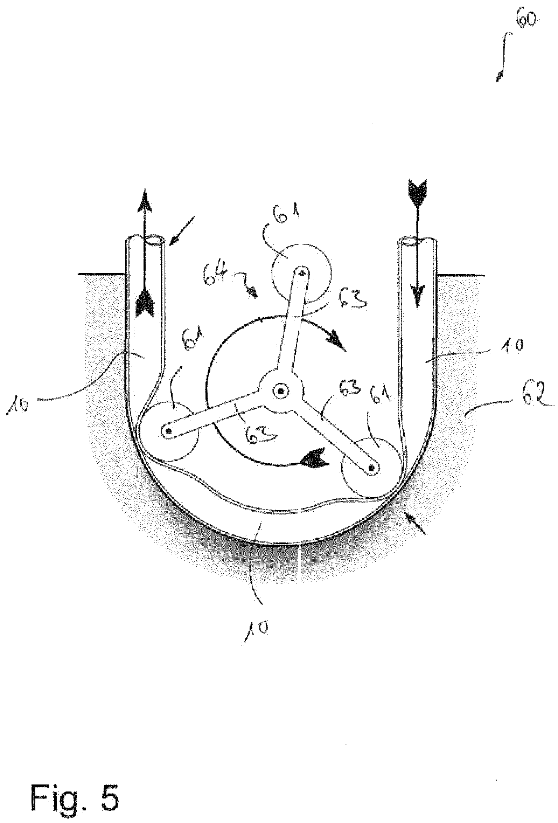

In **Figure 5** a pump device 60, including a squeezing mechanism, is illustrated. In particular, the pump device 60 is based on a peristaltic's pump principle, having a tube 10 being located between squeezing elements 61, such as moving rollers and a fixed wall 62. For moving a fluid or slurry being located inside the tube 10, the squeezing elements 61 are pressed such against the tube 10 that the tube 10 is squeezed. In the embodiment illustrated in figure 5, the squeezing elements 61 are moving rollers, which are arranged at an end of a strut element 63 of a rotating element 64. In the illustrated embodiment, the rotating element 64 has three strut elements 63, having each a moving roller at its end, the strut elements 63 being equally distanced along a rotating direction, along which the struts elements 63 are moved during the pumping. During the rotation, the location of squeezing the tube 10 is moved for transferring the liquid or slurry inside of the tube 10.

However, such a type of pump device 60 implies huge squeeze deformations of the tube 10 to ensure leak tightness of the encapsulated volume. This deformation implies fatigue degradation of the tube 10, which can result in an early failure.

Moreover, this squeeze deformation generate an internal stresses in the tube 10, which increase with the tube 10 wall thickness. As a result, in case of the need of a thicker tube 10, to support a higher head pressure at the outlet of the pump device 60, a replacement of the tube 10 becomes necessary. Besides that, the increase in the wall thickness of the tube 10 increases the squeezing effort. As a consequence, a higher counter torque at the rotating element 64 is required. All this creates some risks of drifting or actuator stall and will be less energy efficient.

This has several disadvantages, such as the costs being needed, for example, for high performance tubes 10 and their replacement. Furthermore, it is hard to create a compact design due to the size of multiple head pumps and bigger actuators being necessary. Furthermore, the energy efficiency is decreased and the maintenance to exchange a tube 10 or a pumping mechanism, such as a squeezing element 61 on a fixed rotating element 63 is increased. Therefore, it is of advantageous to use a tube 10, which has at least partially an oval cross section for reducing the effort to squeeze it. Preferably, the tube 10 at least partially, in particular in the section being squeezed, corresponds to a tube 10 of the present invention. As a result, the torque or the counter torque, being necessary at the rotating element 64, can be reduced. As a consequence, a tube 10 having a thicker wall can be used, in particular in such an application, which needs a higher pressure at the outlet or output of the pump device 61.

Especially, the oval shape of the tube 10 furthermore reduces the inner stresses of the tube 10, since the strain during squeezing is reduced. As a result, the fatigue behaviour is significantly improved. Especially, the tube 10 can withstand higher head pressures, since a thicker tube's wall can be chosen.

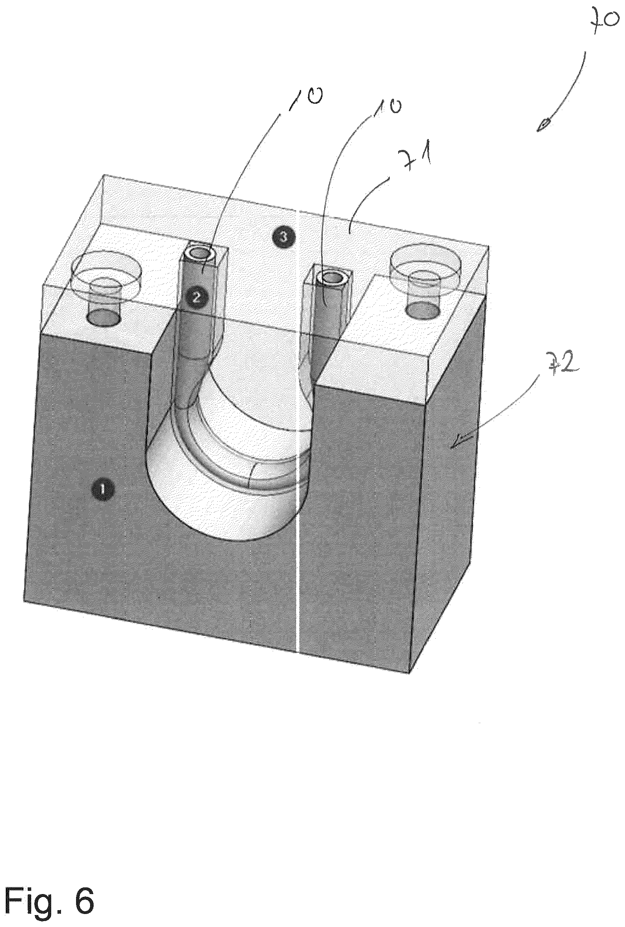

Figure 6 illustrates a mould/jig for forming a tube 10 for the pump device 60 of figure 5.

For generating the specific course and shape of the tube 10, being incorporated into the pump device 61 of figure 4, it is preferably provided that the tube 10, having in the beginning a circular cross section is arranged inside a specific mould 70 and/or jig having a forming base 72 and preferably a forming cap 71 with a tube groove. In particular, the tube 10 is arranged inside the forming base 72, such that the general course of the tube 10 corresponds to the general course of the tube 10, when the tube 10 is assembled in the pump device 61. In addition, the tube 10 is deformed such that at least partially the circular cross section is deformed into an oval cross section. For generating a desired inner stress and for maintaining the shape, being established by the mould 70 or jig, it is preferably provided that the tube 10 within the mould or jig is affected for several minutes by a heated media, such as hot water. Subsequently, it is cooled down by using a cold media, such as cold water. As a result, the deformed cross section will be maintained after removing the tube 10 from the mould 70/jig. Although, this tube 10 deformation can be achieved in a flat design, it is of advantage to create the general course of the tube 10, being adapted to the course of the tube 10 in the assembled stage of the pump device 30, since there is at least some risk of tube kinking, which might penalize pump function and/or induce tube 10 sticking. Therefore, it is beneficial to use a mould 70 and/or jig having a substantially an inner side wall, which mainly corresponds to the inner side wall of the pump device 60, the inner side walls determining the course of the tube 10, being located or arranged inside the mould 70/jig.

### Reference numbers:

- 1: pinch valve
- 10: tube
- 11: inner channel
- 12: inner side
- 13: inner curvature
- 15: protrusion
- 18: handpiece
- 20: stationary unit
- 21: first part
- 22: second part
- 24: spring element
- 25: moving part
- 30: powder chamber
- 31: sleeve tube
- 32: joining unit
- 33: housing
- 40: handpiece
- 41: first input channel
- 42: second input channel
- 50: interface
- 60: pump device
- 61: squeezing element
- 62: wall
- 63: strut element
- 64: rotating element
- 70: mould
- 71: cap
- 72: basic body
- 100: powder gas jet device
- T: transport direction
- D1: first axis
- D2: second axis
- 71: cap
- 72: basic body
- 100: powder gas jet device
- T: transport direction
- D1: first axis
- D2: second axis

## Claims

1. A tube (10) for a pinch valve (1), in particular incorporated into a powder gas jet device (100), the tube (10) having an inner channel (11) for transporting a medium under pressure in an operation mode along a transport direction (T), the tube (10) having an inner curvature delineating the circumference of the inner channel (11) in a cross section of the tube (10) along a plane perpendicular to the inner channel (T), a shape of the tube (10) being configured such that the inner curvature (13) presents at least a contraction section, which, in the operation mode, undergoes deformation forces that tend to contract the contraction section of the inner curvature (13), wherein the inner curvature (13) comprises two contraction sections diametrally opposed to each other, wherein for forming the contraction section the tube (10) varies its thickness and/or a radius of the curvature, being assigned to the inner curvature (13), along the circumferential direction, wherein the inner curvature (13) includes a protrusion (15) facing to a centre of the tube (10), **characterized in that** the cross section of the inner channel (11) in a plane perpendicular to the transport direction (T) corresponds to a Cassini oval.

2. The tube (10) according to claim 1, wherein the cross section of the inner channel (11) has a first axis (D1) and a second axis (D2), which is not parallel to the first axis (D1), wherein a ratio of the first axis (D1) to the second axis (D2) has a value between 0.1 and 0.95, preferably between 0.2 and 0.8 and more preferably between 0.55 and 0.8.

3. The tube (10) according to one of the preceding claims, wherein the tube (10) is pre-shaped for providing the contraction section.

4. The tube (10) according to one of the preceding claims, wherein along the inner curvature (13) a radius of curvature changes, wherein a curvature of the inner curvature (13), being defined as reciprocal value of the radius of curvature, is smaller than 1 1/mm, more preferably smaller than 0.5 1/mm or most preferably smaller than 0.1 1/mm or has a negative value.

5. The tube (10) according to one of the preceding claims, wherein an inner side (12) is coated at least partially.

6. A pinch valve (1) having a tube (10) according to one of the preceding claims, in particular having an actuation mechanism, wherein the actuation mechanism preferably includes a first part (21) and a second part (22) being arranged opposite to each other, wherein the actuation mechanism is configured to change the distance between the first part (21) and the second part (22), in particular, for opening and closing the inner channel (11), the tube (10) being located between the first part (21) and the second part (22), wherein the first contraction section of the tube is located adjacent to the first part (21) and the second contraction section of the tube is located adjacent to the second part (11).

7. A method for producing a tube (10) according to one of the claims 1 to 5 ,comprising a heat treatment, wherein the heat treatment includes
- heating the tube to a temperature between 40 °C and 500 °C, preferably between 60 °C and 200 °C and most preferably 80 °C and 100°C, the heating in particular taking 0 to 30 minutes, preferably 1 to 20 minutes and most preferably 1 to 10 minutes and/or
- cooling the tube to a temperature between 1 °C and 50°C, preferably between 5°C and 50°C and most preferably between 15 °C and 25 °C.

8. A pump device (60), in particular a peristaltic pump, comprising a squeezing mechanism and a tube (10) according to one of the claims 1 to 5, wherein the pump device (60) is preferably integrated in a powder gas jet device (100).

9. A powder gas jet device (100) comprising a pinch valve (1) according claim 6.

## Patentansprüche

1. Rohr (10) für ein Quetschventil (1), insbesondere eingebaut in einer Pulvergasstrahlvorrichtung (100), wobei das Rohr (10) einen Innenkanal (11) zum Transportieren eines unter Druck stehenden Mediums in einem Betriebsmodus entlang einer Transportrichtung (T) aufweist, wobei das Rohr (10) eine Innenkrümmung aufweist, die den Umfang des Innenkanals (11) in einem Querschnitt des Rohrs (10) entlang einer Ebene senkrecht zum Innenkanal (T) begrenzt, wobei die Form des Rohrs (10) so ausgebildet ist, dass die Innenkrümmung (13) zumindest einen Verengungsabschnitt aufweist, der im Betriebsmodus Verformungskräften ausgesetzt ist, die dazu neigen, den Verengungsabschnitt der Innenkrümmung (13) zu verengen, wobei die Innenkrümmung (13) zwei einander diametral gegenüberliegende Verengungsabschnitte umfasst, wobei zur Bildung des Verengungsabschnitts das Rohr (10) seine Dicke und/oder einen Krümmungsradius variiert, der der Innenkrümmung (13) zugeordnet ist, entlang der Umlaufrichtung variiert, wobei die Innenkrümmung (13) einen zum Zentrum des Rohrs (10) weisenden Vorsprung (15) umfasst, **dadurch gekennzeichnet, dass** der Querschnitt des Innenkanals (11) in einer Ebene senkrecht zu der Transportrichtung (T) einem Cassini-Oval entspricht.

2. Rohr (10) gemäß Anspruch 1, wobei der Querschnitt des Innenkanals (11) eine erste Achse (D1) und eine zweite Achse (D2) aufweist, die nicht parallel zur ersten Achse (D1) ist, wobei das Verhältnis der ersten Achse (D1) zur zweiten Achse (D2) einen Wert zwischen 0,1 und 0,95, bevorzugt zwischen 0,2 und 0,8 und besonders bevorzugt zwischen 0,55 und 0,8 aufweist.

3. Rohr (10) gemäß einem der vorhergehenden Ansprüche, wobei das Rohr (10) zur Bildung des Verengungsabschnitts vorgeformt ist.

4. Rohr (10) gemäß einem der vorhergehenden Ansprüche, wobei sich entlang der Innenkrümmung (13) ein Krümmungsradius ändert, wobei eine Krümmung der Innenkrümmung (13), definiert als Kehrwert des Krümmungsradius, kleiner als 1 1/mm ist, besonders bevorzugt kleiner als 0,5 1/mm oder am meisten bevorzugt kleiner als 0,1 1/mm ist oder einen negativen Wert aufweist.

5. Rohr (10) gemäß einem der vorhergehenden Ansprüche, wobei eine Innenseite (12) zumindest teilweise beschichtet ist.

6. Quetschventil (1) aufweisend ein Rohr (10) gemäß einem der vorhergehenden Ansprüche, insbesondere aufweisend ein Betätigungsmechanismus, wobei der Betätigungsmechanismus bevorzugt ein erstes Teil (21) und ein zweites Teil (22) umfasst, die einander gegenüberliegend angeordnet sind, wobei der Betätigungsmechanismus so ausgebildet ist, dass er den Abstand zwischen dem ersten Teil (21) und dem zweiten Teil (22) verändert, insbesondere zum Öffnen und Schließen des Innenkanals (11), wobei das Rohr (10) zwischen dem ersten Teil (21) und dem zweiten Teil (22) angeordnet ist, wobei der erste Verengungsabschnitt des Rohrs benachbart an dem ersten Teil (21) und der zweite Verengungsabschnitt des Rohrs benachbart an dem zweiten Teil (22) angeordnet ist.

7. Methode zum Herstellen eines Rohrs (10) gemäß einem der Ansprüche 1 bis 5, umfassend eine Wärmebehandlung, wobei die Wärmebehandlung umfasst
- Heizen des Rohrs zu einer Temperatur zwischen 40 °C und 500 °C, bevorzugt zwischen 60 °C und 200 °C und am meisten bevorzugt 80 °C und 100 °C, wobei das Heizen insbesondere 0 bis 30 Minuten dauert, bevorzugt 1 bis 20 Minuten und am meisten bevorzugt 1 bis 10 Minuten und/oder -
- Kühlen des Rohrs zu einer Temperatur zwischen 1 °C und 50 °C, bevorzugt zwischen 5 °C und 50 °C und am meisten bevorzugt zwischen 15 °C und 25 °C.

8. Pumpvorrichtung (60), insbesondere eine Peristaltikpumpe, umfassend ein Quetschmechanismus und ein Rohr (10) gemäß einem der Ansprüche 1 bis 5, wobei die Pumpvorrichtung (60) bevorzugt in eine Pulvergasstrahlvorrichtung (100) integriert ist.

9. Pulvergasstrahlvorrichtung (100) umfassend ein Quetschventil (1) gemäß Anspruch 6.

## Revendications

1. Tube (10) destiné à une vanne à pincement (1), en particulier intégré dans un dispositif à jet de gaz et de poudre (100), le tube (10) comportant un canal interne (11) destiné à transporter un fluide sous pression, en mode de fonctionnement, selon une direction de transport (T), le tube (10) présentant une courbure interne délimitant la circonférence du canal interne (11) dans une section transversale du tube (10) le long d'un plan perpendiculaire au canal interne (T), la forme du tube (10) étant conçue de telle sorte que la courbure interne (13) présente au moins une section de contraction qui, en mode de fonctionnement, subit des forces de déformation qui tendent à contracter la section de contraction de la courbure interne (13),
dans lequel
la courbure interne (13) comprend deux sections de contraction diamétralement opposées l'une à l'autre,
pour former la section de contraction, le tube (10) fait varier son épaisseur et/ou un rayon de courbure associé à la courbure interne (13), le long de la direction circonférentielle,
la courbure interne (13) comprend une saillie (15) tournée vers le centre du tube (10),
**caractérisé en ce que** la section transversale du canal interne (11) dans un plan perpendiculaire à la direction de transport (T) correspond à un ovale de Cassini.

2. Tube (10) selon la revendication 1,
dans lequel la section transversale du canal interne (11) présente un premier axe (D1) et un deuxième axe (D2) qui n'est pas parallèle au premier axe (D1), le rapport du premier axe (D1) sur le deuxième axe (D2) ayant une valeur comprise entre 0,1 et 0,95, de préférence entre 0,2 et 0,8 et de manière particulièrement préférée entre 0,55 et 0,8.

3. Tube (10) selon l'une des revendications précédentes,
dans lequel le tube (10) est préformé pour constituer la section de contraction.

4. Tube (10) selon l'une des revendications précédentes,
dans lequel, le long de la courbure interne (13), un rayon de courbure varie, la courbure de la courbure interne (13), définie comme l'inverse du rayon de courbure, étant inférieure à 1 1/mm, de préférence inférieure à 0,5 1/mm ou, de manière particulièrement préférée, inférieure à 0,1 1/mm, ou présente une valeur négative.

5. Tube (10) selon l'une des revendications précédentes,
dans lequel une face interne (12) est revêtue au moins partiellement.

6. Vanne à pincement (1) comportant un tube (10) selon l'une des revendications précédentes, en particulier comportant un mécanisme d'actionnement,
dans laquelle
le mécanisme d'actionnement comprend de préférence une première partie (21) et une deuxième partie (22) disposées à l'opposé l'une de l'autre,
le mécanisme d'actionnement est conçu pour modifier la distance entre la première partie (21) et la deuxième partie (22), en particulier pour ouvrir et fermer le canal interne (11), le tube (10) étant situé entre la première partie (21) et la deuxième partie (22),
la première section de contraction du tube est située à proximité de la première partie (21), et la deuxième section de contraction du tube est située à proximité de la deuxième partie (11).

7. Procédé de fabrication d'un tube (10) selon l'une des revendications 1 à 5, comprenant un traitement thermique, le traitement thermique consistant à :
- chauffer le tube à une température comprise entre 40 °C et 500 °C, de préférence entre 60 °C et 200 °C et de manière particulièrement préférée entre 80 °C et 100 °C, le chauffage durant en particulier de 0 à 30 minutes, de préférence de 1 à 20 minutes et de manière particulièrement préférée 1 à 10 minutes, et/ou
- refroidir le tube jusqu'à une température comprise entre 1 °C et 50 °C, de préférence entre 5 °C et 50 °C et de manière particulièrement préférée entre 15 °C et 25 °C.

8. Dispositif de pompage (60), en particulier pompe péristaltique, comprenant un mécanisme de pincement et un tube (10) selon l'une des revendications 1 à 5, dans lequel le dispositif de pompage (60) est de préférence intégré dans un dispositif à jet de poudre et de gaz (100).

9. Dispositif à jet de poudre et de gaz (100) comprenant une vanne à pincement (1) selon la revendication 6.
